# EUROPEAN PATENT SPECIFICATION

(11) **EP 1 715 715 B1**
(45) Date of publication and mention of the grant of the patent: **28.08.2013**
(21) Application number: 06252118.2
(22) Date of filing: 19.04.2006
(51) Int. Cl.: H04W 36/12, H04W 36/14, H04B 7/185, H04W 28/08

(54) **Load balancing in a communication network**
Lastverteilung in einem Kommunikationsnetz
Equilibrage de charge dans un réseau de communication

(30) Priority: 19.04.2005 GB 0507901
(43) Date of publication of application: 25.10.2006
(73) Proprietor: Vodafone Group PLC, Newbury Berkshire RG14 2FN (GB)
(72) Inventor: Pudney, Christopher David, Newbury RG20 9EZ (GB)
(74) Representative: Harries, Simon George

(56) References cited:
- WO-A-01/39525
- WO-A-2005/020617
- ERICSSON: "S2-050715: CN Centric Load Re-distribution with A/Gb/Iu.flex" 3GPP TSG-SA WGS MEETING NO. 45, [Online] 8 April 2005 (2005-04-08), pages 1-7, XP002395531 Bejing Retrieved from the Internet: URL:www.3gpp.org> [retrieved on 2006-08-18]

## Description

The present invention relates to a method of and system for reducing the load on a node in a cellular telecommunications network. More particularly but not exclusively, the present invention relates to a method of and a system for reducing the load on a Mobile Switching Centre or a Serving GPRS Support Node.

It is a problem that load on a node, such as a Mobile Switching Centre or a Serving GPRS Support Node, must from time to time be removed for maintenance or replacement of the node. Also, when load on a node is excessive, signal traffic through a node will be slowed or stopped. It is undesirable from a user perspective for signal traffic to be slowed or stopped. There is therefore a need to transfer signal traffic elsewhere.

In addition, when a node that has been stopped is restored to service, or a new node is added, its traffic needs to be increased gradually by transferring load from another node or nodes, thereby reducing the load on the other node or nodes.

One proposal for transferral of load is found in SA 2 document S2-050643, which is available at http://www.3gpp.org/. A drawback of the proposal is that a node to which a terminal's signal traffic is transferred has no information on the identity of the node from which the transfer was made. Three other proposals, also all with drawbacks, are found in S2-050677, S2-050678 and S2-050715 also at the above web address. In particular, known core network re-routing solutions require up to one bit to be removed from the Temporary Mobile Subscriber Identity or Packet Temporary Mobile Subscriber Identity code space.

According to the present invention, there is provided a method of reducing load on a first node in a cellular telecommunications network, the network including a a radio access network configured to broadcast at least one area identifier, each identifying different cellular areas in the telecommunications network and a core network for providing telecommunications functions to terminals registered therewith, the method including the steps of the network sending to a terminal an area update message to cause the terminal to request a location area or routing area or tracking area update from the network; the network sending to the terminal second node identification information from which an address of the second node can be identified; the terminal sending in response to the message a request for an area update, the request including said second node identification information; and the network receiving the request and using said second node identification information to route the request to the second node, characterised in that:
the area update message further includes an area identifier which does not correspond to a broadcast area identifier but which includes first node identification information;
in that the request sent by the terminal includes the area identifier having said first node identification information;
and in that the second node uses said first node identification infonnation in the area identifier to identify an address of the first node.

According to the present invention, there is further provided a system for reducing load on a first node in a cellular telecommunications network, comprising a telecommunications network including a radio access network configured to broadcast at least one area identifier each identifying different cellular areas in the telecommunications network and a core network for providing telecommunications functions to terminals registered therewith. and a terminal registered with the core network, the network sending to a terminal an area update message to cause the terminal to request a location area or routing area or tracking area update from the network: the network sending to the terminal second node identification information from which an address of the second node can be identified; the terminal sending in response to the message a request for an area update, the request including said second node identification information; and the network receiving the request and using said second node identification information to route the request to the second node; characterised in that:
the area update message further includes an area identifier which does not correspond to a broadcast area identifier but which includes first node identification information;
in that the request sent by the terminal includes the area identifier having said first node identification information;
and in that the second node uses said first node identification information in the area identifier to identify an address of the first node.

Signal traffic from mobile terminals can therefore be transferred from the first node to the second node without disruption of a service provided to the terminal.

Signal traffic from mobile terminals can therefore be transferred from the first node to the second node without disruption of a service provided to the terminal.

Advantageously, the present invention can be implemented in known networks, for example, a known GPRS network, merely by providing the second node with means to identify the address of the first node from the first node identification means.

In an embodiment of the invention, the second node retrieves the terminal's context information from the first node. In another embodiment, the radio access network is broadcasting a first location area identity and/or a first routing area identity or a first tracking area identity identifying the location area or routing area or tracking area respectively in which the terminal is located, as is conventional. The first node identification information however comprises a second location area identity or a second routing area identity or a second tracking area identity respectively to cause the terminal to request the location area or routing area or tracking area update.

For a better understanding of the present invention embodiments will now be described by way of example only, with reference to the accompanying drawings, in which:
Figure 1 is a diagrammatic drawing of key elements of a GSM mobile telephone network for use in explaining the operation of such a network;
Figure 2a shows diagrammatically Location Areas (LA) and Mobile Switching Centres (MSC) through which calls to and from mobile terminals in the LAs are routed in a conventional configuration;
Figure 2b shows diagrammatically LA and MSC through which calls to and from mobile terminals in the LAs are routed in a network that uses the functionality specified in 3GPP TS 23.236 entitled "Intra-domain connection of Radio Access Network (RAN) nodes to multiple Core Network (CN) nodes";
Figure 3 is a flow chart showing how load on an MSC can be routed through a different MSC;
Figure 4a diagrammatically shows Routing Areas (RA) and Serving GPRS Support Nodes (SGSN) through which calls to and from mobile terminals in the RAs are routed in a conventional configuration;
Figure 4b diagrammatically shows RAs and SGSN through which calls to and from mobile terminals in the RAs are routed in a network that uses the functionality specified in 3GPP TS 23.236 entitled "Intra-domain connection of Radio Access Network (RAN) nodes to multiple Core Network (CN) nodes";
Figure 5 is a flow chart showing how load on an SGSN can be routed through a different SGSN;
Figure 6 diagrammatically shows LAs and MSCs and SGSNs through which calls/data to and from mobile terminals in the LAs can be routed; and
Figure 7 is a flow chart showing an alternative way to route load through the network nodes in Figure 6.

In the drawings like elements are generally designated with the same reference numeral.

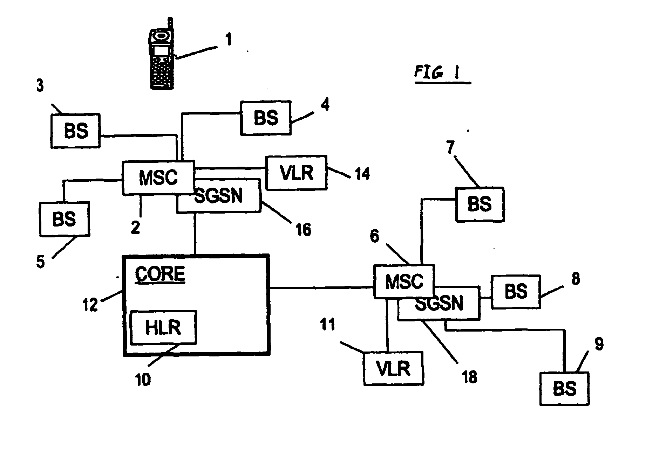

Key elements of a mobile telecommunications network, and its operation, will now briefly be described with reference to Figure 1.

Each base station (BS) corresponds to a respective cell of its telecommunications network and receives calls from and transmits calls to a mobile terminal in that cell by wireless radio communication in one or both of the circuit switched or packet switched domains. Such a subscriber's mobile terminal is shown at 1. The mobile terminal may be a handheld mobile telephone, a personal digital assistance (PDA) or a laptop computer equipped with a datacard. Each base station comprises a base transceiver station (BTS) and a base station controller (BSC). A BSC may control more than one BTS. The BTSs and BSCs comprise the radio access network.

Conventionally, the base stations are arranged in groups and each group of base stations is controlled by one mobile switching centre (MSC), such as MSC 2 for base stations 3,4 and 5. As shown in Figure 1, the network has another MSC 6, which is controlling a further three base stations 7,8 and 9. In practice, the network will incorporate many more MSCs and base stations than shown in Figure 1.

Using functionality described in 3GPP TS 23.236, it is possible to connect one base station to multiple MSCs.

Each subscriber to the network is provided with a smart card or SIM which, when associated with the user's mobile terminal identifies the subscriber to the network. The SIM card is pre-programmed with a unique identification number, the "International Mobile Subscriber Identity" (IMSI) which is not visible on the card and is not known to the subscriber. The subscriber is issued with a publicly known number, that is, the subscriber's telephone number, by means of which calls to the subscriber are initiated by callers. This number is the MSISDN.

The network includes a home location register (HLR) 10 which, for each subscriber to the network, stores the IMSI and the corresponding MSISDN together with other subscriber data, such as the current or last known location of the subscriber's mobile terminal.

When the subscriber wishes to activate their mobile terminal in a network (so that it may make or receive calls subsequently), the subscriber places their SIM card in a card reader associated with the mobile terminal (terminal 1 in this example). The mobile terminal 1 then transmits the IMSI (read from the card) to the base station 3 associated with the particular cell in which the terminal 1 is located. In a conventional network, the base station 3 then transmits this IMSI to the MSC 2 with which the BS 3 is registered. In a network using the functionality described in 3GPP TS 23.236, the base station follows prescribed rules to select which MSC to use, and then transmits this IMSI to the selected MSC.

MSC 2 now accesses the appropriate location in the HLR 10 present in the network core 12 and extracts the corresponding subscriber MSISDN and other subscriber data from the appropriate storage location, and stores it temporarily in a location in a visitor location register (VLR) 14. In this way, therefore the particular subscriber is effectively registered with a particular MSC (MSC 2), and the subscriber's information is temporarily stored in the VLR (VLR 14) associated with that MSC.

When the HLR 10 is interrogated by the MSC 2 in the manner described above, the HLR 10 additionally performs an authentication procedure for the mobile terminal 1. The HLR 10 transmits authentication data to the MSC 2 in "challenge" and "response" forms. Using this data, MSC 2 passes a "challenge" to the mobile terminal 1 through base station 3. Upon receipt of this data, the mobile terminal 1 passes this data to its SIM and produces a "response". This response is generated using an encryption algorithm on the SIM and a unique Ki on the SIM. The response is transmitted back to the MSC 2 which checks it against its own information for the subscriber which checks it against information that it has obtained for that subscriber from the HLR 10 in order to complete the authentication process. If the response from the mobile terminal 1 is as expected, the mobile terminal 1 is deemed authenticated. At this point the MSC 2 requests subscription data from the HLR 10. The HLR 10 then passes the subscription data to the VLR 14.

The authentication process will be repeated at regular intervals while the mobile terminal 1 remains activated and can also be repeated each time the mobile terminal makes or receives a call, if required.

Each of the MSCs of the network (MSC 2 and MSC 6) has a respective VLR (14 and 11) associated with it and operates in the same way as already described when a subscriber activates a mobile terminal in one of the cells corresponding to one of the base stations controlled by that MSC.

When the subscriber using mobile terminal 1 wishes to make a call, having already inserted the SIM card into the reader associated with this mobile terminal and the SIM has been authenticated in the manner described, a call may be made by entering the telephone number of the called party in the usual way. This information is received by the base station 3 and is then routed to the called party via the MSC 2. By means of the information held in the VLR 14, MSC 6 can associate the call with a particular subscriber and thus record information for charging purposes.

The MSCs 2 and 6 support communications in the circuit switched domain - typically voice calls. Corresponding SGSNs 16 and 18 are provided to support communications in the packet switched domain - such as GPRS data transmissions. The SGSNs 16 and 18 function in an analogous way to the MSCs 2 and 6. The SGSNs 16, 18 are equipped with an equivalent to the VLR for the packet switched domain.

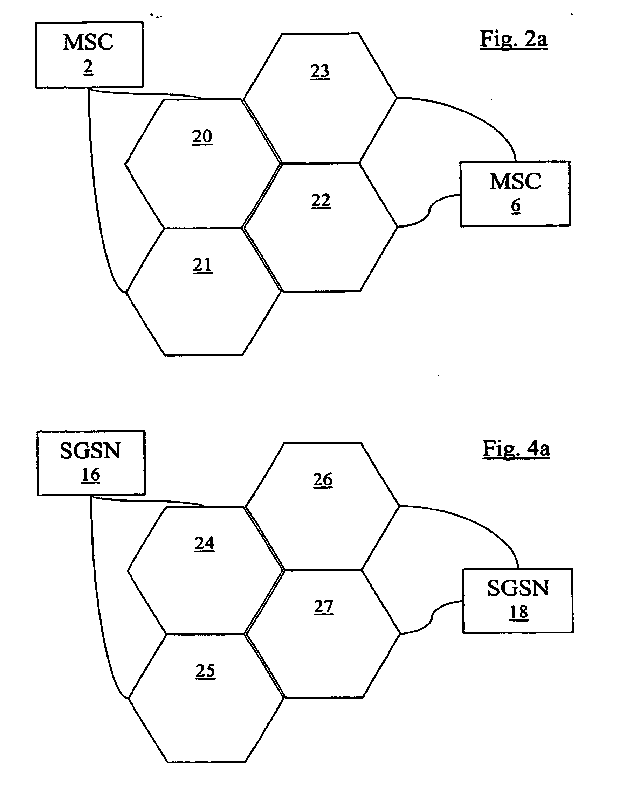

Referring to Figure 2a, each MSC 2, 6 serves two Location Areas (LA). A first and a second LA are served by MSC 2 and are shown respectively at 20 and 21. The LAs served by MSC 6 are shown at 22 and 23. Each MSC 2, 6 may serve more or fewer LAs. Each LA comprises a group of cells.

In each cell of an LA, a Location Area Identity (LAI) by which the LA is uniquely identified is broadcast by the BTS for that cell. Each cell has a Cell Global Identity used by a mobile terminal in the cell. The current CGI is stored by the CN 12. The CGI is a concatenation of an LAI and a Cell Identity (CI) and uniquely identifies a given cell. When a mobile terminal registers with the network in LA 2, the BSC passes to the MSC 2 the CGI of the cell used by the mobile terminal.

The first and second LAs 20, 21 are uniquely identified by a first and a second LAI respectively. When a mobile terminal moves from the first LA 20 to the second LA 21, the mobile terminal detects that a different LAI is being broadcast (by its local BTS) and sends a location area update (LAU) request to the network. The request includes the first LAI and the mobile terminal's current Temporary Mobile Subscriber Identity (TMSI). The MSC 2 then sends a new TMSI to the mobile terminal. When a mobile terminal moves from the first LA 20 to LA 22, which is administered by MSC 6, similar steps occur and the MSC 6 requests user profile information from the MSC 2.

Each MSC 2,6 in the network has a table mapping each LAI to the address of an MSC in the network through which signal traffic for mobile terminals in the LA identified by that LAI is routed. The first and second LAIs are thus mapped to the address of the MSC 2 and the LAIs corresponding to LAs 22, 23 are mapped to the address of the MSC 6. In a first embodiment of the invention, a further LAI is provided in the table mapping to the address of the MSC 6. The further LAI does not correspond to an LA and is not broadcast by any BTS.

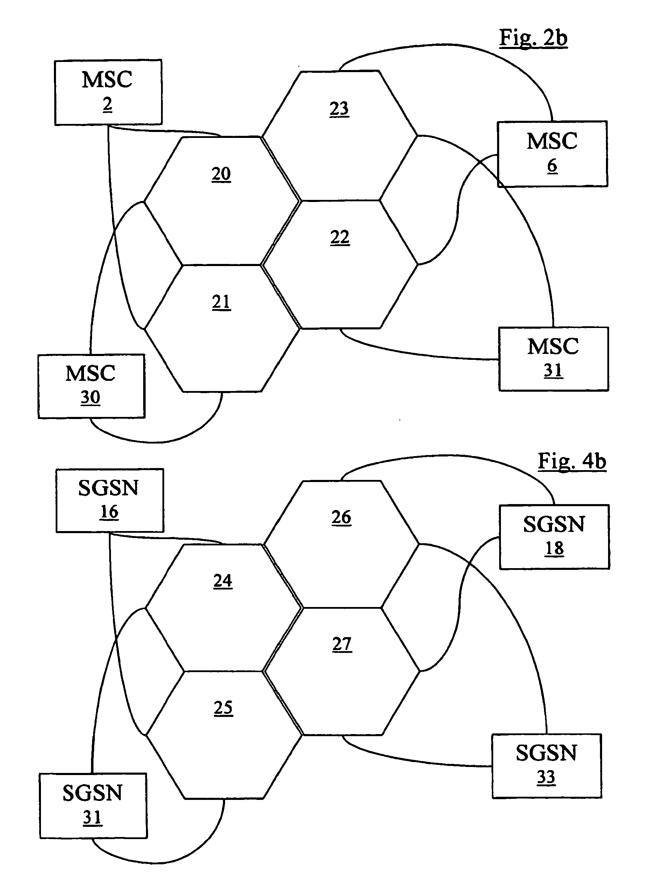

Referring to Figure 2b, the LAs and MSCs of Figure 2a are shown together with two further MSCs. Each MSC 2, 6, 30, 32 serves two LAs. The first and second LAs 20, 21 are served by the MSC 2 and an MSC 30. The LAs 22, 23 are served by the MSC 6 and an MSC 32. Each MSC 2, 6, 30, 32 may serve more or fewer LAs.

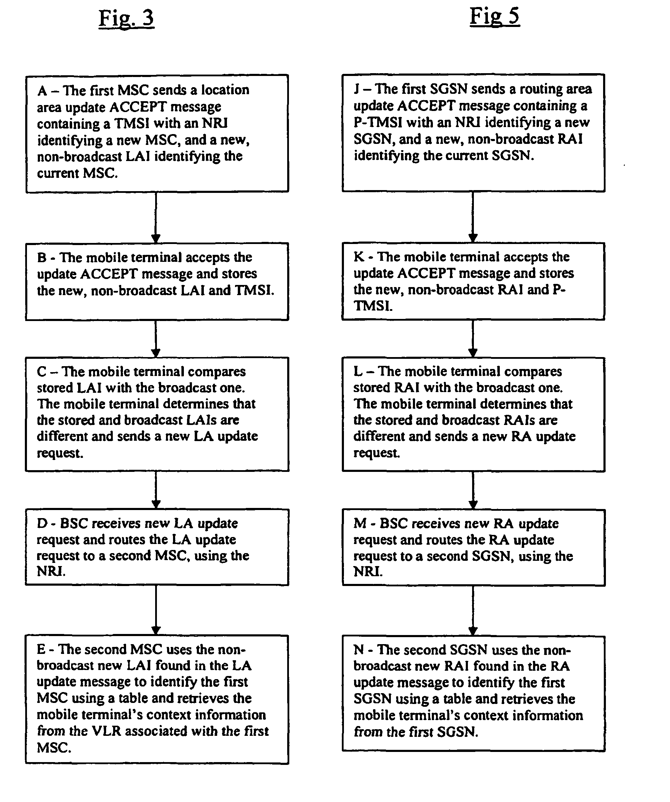

In the event that signal traffic from and to a mobile terminal in the LA 20 is to be transferred from the MSC 2, the MSC 2 sends a LAU ACCEPT message containing a TMSI with a Network Resource Identifier (NRI) value identifying and targeting MSC 30 and containing the further LAI to a mobile terminal in the first LA 20. This step is shown at A in Figure 3. Referring further to Figure 3, at B the mobile terminal accepts the LAU ACCEPT message and stores the further LAI and TMSI.

At C the mobile terminal compares the stored further LAI with the first LAI and determines that they are different. The mobile terminal then sends an LA update request to the network via its local BSC. The request contains the TMSI and the further LAI received in the LAU ACCEPT message.

As shown at D the BSC receives the LAU update request and, deriving the NRI from the TMSI, uses the NRI to route the request to the MSC 30. Signal traffic is thereby transferred from the MSC 2 to the MSC 30. The MSC 30 then identifies the previous MSC, MSC 2, using its table and using the further LAI, which maps the further LAI to the address of MSC 2, as shown at E. The MSC 6 then retrieves the mobile terminal's context information from the VLR 14 of the MSC 2.

Referring to Figure 4a, each SGSN 16, 18 serves two Routing Areas (RA). A first and a second RA are served by SGSN 16 and are respectively shown at 24 and 25. The RAs served by SGSN 18 are shown at 26 and 27. Each SGSN 16, 18 may serve more or fewer than two RAs. Each RA comprises a group of cells Each RA 24, 25, 26 27 has a respective Routing Area Identification (RAI) uniquely identifying that RA. The RAI is broadcast by the BTSs in the RA which the RAI identifies.

The first and second RAs 24, 25 are uniquely identified by a first RAI and a second RAI respectively. When a mobile terminal moves from the first RA 24 to the second RA 25, the mobile terminal detects that a different RAI is being broadcast and sends a RA update (RAU) request to the network. The RAU request includes the first RAI and the mobile terminal's current Packet-Temporary Mobile Subscriber Identity (P-TMSI). In this case, the SGSN 16 then sends a new P-TMSI to the mobile terminal. When a mobile terminal moves from the first RA 24 to RA 26, which is administered by SGSN 18, similar steps occur and additionally the SGSN 18 requests user profile information from the SGSN 16.

Each SGSN 16, 18 in the network has a table mapping each RAI to an address of an SGSN in the network through which signal traffic for mobile terminals in the RA identified by that RAI is routed. The first and second RAIs are thus mapped to the SGSN 16 and the RAIs identifying RAs 26, 27 are mapped to the SGSN 18. In a second embodiment of the invention, for use separately to or in combination with the first embodiment, a further RAI is provided in the table mapping to the address of SGSN 18. The further RAI does not identify an RA and is not broadcast by any BTS.

Referring to Figure 4b, the SGSNs and RAs of Figure 4a are shown together with two further SGSNs. Each SGSN 16, 18, 31, 33 serves two RAs. The first and the second RAs 24, 25 are served by the SGSN 2 and an SGSN 30. The RAs 26, 27 are served by SGSN 6 and SGSN 33. Each SGSN 16, 18, 31, 33 may serve more or fewer RAs. Each RA comprises a group of cells.

In the event that signal traffic through the SGSN 16 is to be transferred to the SGSN 31, the SGSN 16 sends an RAU ACCEPT message containing the P-TMSI with an NRI value identifying and targeting the SGSN 18 and containing the further RAI to a mobile terminal in the first RA 24. This step is shown at J in Figure 5. Referring further to Figure 5, at K the mobile terminal accepts the RAU ACCEPT message and stores the further RAI and P-TMSI.

At L, the mobile device compares the stored, further RAI with the first RAI and determines that they are different. The mobile terminal then sends an RA update request to the network via its local BSC. The request includes the P-TMSI and the further RAI received in the RAU ACCEPT message.

As shown at M, the BSC receives the RAU update request and, using the NRI, routes the request to the SGSN 31. Signal traffic is thereby transferred from the SGSN 16 to the SGSN 31. The SGSN 31 then identifies the previous SGSN, SGSN 16, using its table and using the further RAI, which maps the further RAI to the address of SGSN 16, as shown at N. The SGSN 31 then retrieves the mobile terminal's content information from the SGSN 16.

It is worth noting that, in a GPRS network, because RAIs are subsets of LAIs, it is likely that two bits are removed from the codespace of the LAI/RAI to indicate "CN load balancing". One bit indicates MSC load balancing, and the other bit indicates SGSN load balancing. Typically, one bit is removed from the LAI and one bit removed from the RAI.

Such an approach solves RAN centric Gb interface problems that are present in the SA documents mentioned above, and avoids loss of codespace within the TMSI. It also avoids problems with a prior CN centric proposal of, for example, data loss during the "short PRU timer" and a fifteen second timeout in the CS domain.

In relation to a Gs interface, current proposals have missed that the fact that the MSC "delegates the implicit detach function" to the SGSN when the Gs interface is in use and periodic updates are not sent to the MSC. This means that (in NM0=1) when the mobile terminal performs a Periodic Routing Area update to the SGSN, the SGSN does not normally signal to the MSC. Even if the SGSN does, for example due to the "alerting procedure", there is no mechanism for the MSC to cause the TMSI to be reallocated.

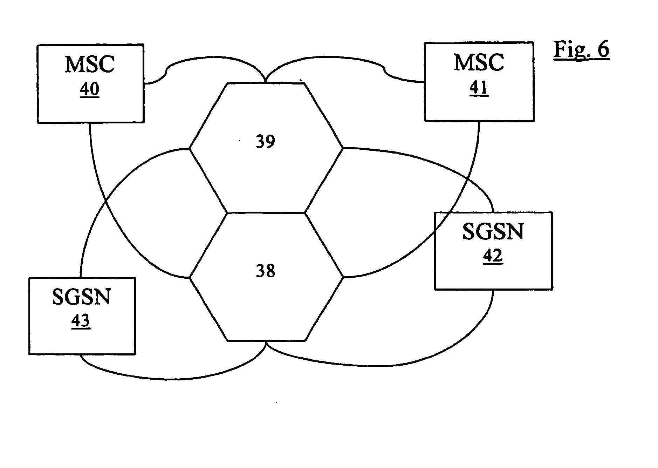

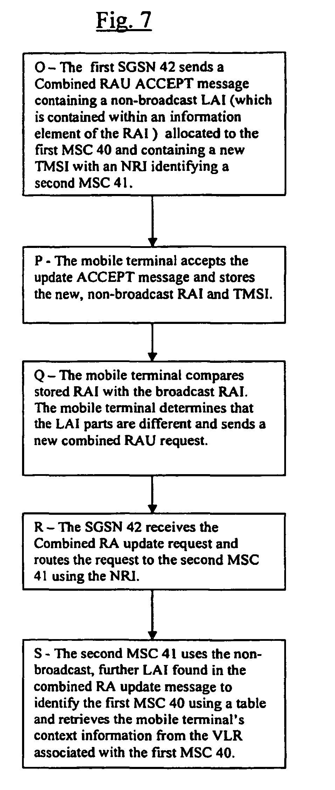

In a third embodiment, described with reference to Figure 6, the SGSN 42 has a table mapping each LAI to the address of an MSC in the network through which signal traffic for mobile terminals in the LA identified by that LAI is routed. A further LAI is provided in the table mapping to the address of the first MSC 40. The SGSN 42 is configured to answer Combined Routing Area updates with a combined RA update ACCEPT message containing a non-broadcast further LAI allocated to the first MSC 40 and containing a TMSI with an NRI identifying a second MSC 41. The non-broadcast further LAI forms part of an information element of a new, non-broadcast RAI sent in the RA update ACCEPT message. The further LAI does not correspond to an LA and is not broadcast. This step is shown at O in Figure 7. Referring further to Figure 7, the mobile terminal accepts the update ACCEPT message and stores the further, non-broadcast LAI and TMSI, as shown at P. The mobile terminal then compares the stored, further LAI with an LAI part of a broadcast RAI, as shown at Q. The mobile terminal determines that these are different and sends a new combined RAU request. At R, the SGSN 42 receives the Combined RA update request and routes the request to the second MSC 41. The second MSC 41 has the table described above for the first embodiment and uses the non-broadcast, further LAI found in the combined RA update message to identify the first MSC 40 using the table. The MSC 41 then retrieves the mobile terminal's context information from the VLR associated with the first MSC 40.

If SGSN and MSC load redistribution is needed simultaneously, then the serving SGSN allocates a non-broadcast RAI with both "MSC load re-distribution" and "SGSN load re-distribution bits set" (within the Location Area Code and Routing Area Code respectively) and allocates a new P-TMSI with an NRI pointing to the new SGSN and a new TMSI with an NRI pointing to the new MSC. The signal transfer from the mobile terminal will thus be transferred from MSC 40 and SGSN 42 to MSC 41 and SGSN 43 respectively.

The embodiments have been described in a GPRS network. However, the invention can be equally utilised in other types of network such as other GSM networks including EDGE or a UMTS network. In a UMTS Terrestrial Radio Access Network of a UMTS network, Radio Network Controllers and node Bs between Iu and Uu interfaces would respectively be in place of the BSCs and BTSs mentioned in the embodiments described above. In relation to UMTS the mobile puts the NRI into the RRC-signally according to the rules specified in 3GPP TS 25.331

The invention can also be used in a 4G or LTE or SAE network in which cells are grouped into tracking areas rather than routing areas for administration purposes. Otherwise, methods and systems for application of the present invention are analogous.

The method of and system for reducing load on a node can be used in a method of and system for re-distributing load on nodes in a network to, for example, increase efficiency in a network.

## Claims

1. A method of reducing load on a first node (2; 16) in a cellular telecommunications network, the network including a radio access network configured to broadcast at least one area identifier, each identifying different cellular areas in the telecommunications network and a core network for providing telecommunications functions to terminals registered therewith, the method including the steps of the network sending to a terminal an area update message to cause the terminal to request a location area or routing area or tracking area update from the network; the network sending second node identification information to the terminal, wherein an address of a second node (30; 31) can be identified from said second node identification information; the terminal sending in response to the message a request for an area update, the request including said second node identification information; and the network receiving the request and using said second node identification information to route the request to the second node (30; 31), **characterised in that**:
the area update message further includes an area identifier which does not correspond to a broadcast area identifier but which includes first node identification information;
**in that** the request sent by the terminal includes the area identifier having said first node identification information;
and **in that** the second node uses said first node identification information in the area identifier to identify an address of the first node (2; 16).

2. A system for reducing load on a first node (2, 16) in a cellular telecommunications network, comprising a telecommunications network including a radio access network configured to broadcast at least one area identifier each identifying different cellular areas in the telecommunications network and a core network for providing telecommunications functions to terminals registered therewith, and a terminal registered with the core network, the network sending to a terminal an area update message to cause the terminal to request a location area or routing area or tracking area update from the network; the network sending second node identification information to the terminal, wherein an address of a second node (30; 31) can be identified from said second node identification information; the terminal sending in response to the message a request for an area update, the request including said second node identification information; and the network receiving the request and using said second node identification information to route the request to the second node (30; 31); **characterised in that**:
the area update message further includes an area identifier which does not correspond to a broadcast area identifier but which includes first node identification information;
**in that** the request sent by the terminal includes the area identifier having said first node identification information;
and **in that** the second node uses said first node identification information in the area identifier to identify an address of the first node (2; 16).

3. A method or system according to claim 1 or 2 wherein the second node (30; 31) retrieves the terminal's context information from the first node (2; 16).

4. A method or system according to any preceding claim wherein the area update message is sent by the first node (2, 16).

5. A method or system according to any preceding claim wherein the area update message contains the first node identification information and the second node identification information.

6. A method or a system according to any preceding claim wherein the radio access network broadcasts a first area identity identifying the area in which the terminal is located, and such that the terminal is caused to request the area update since the area identifier in the area update message does not correspond to the first area identity.

7. A method or a system according to any one of claims 1 to 5 wherein the radio access network broadcasts a first routing area identity including a first location area identity respectively identifying the routing area and location area in which the terminal is located and such that the terminal is caused to request a combined routing area update since the area identifier in the area update message does not correspond to the first area identity.

8. A method or system according to any preceding claim wherein each area identifier is a location area identity or a routing area identity or a tracking area identity.

9. A method or system according to any preceding claim wherein the node identification information forms part of, if the request is for a location area update, a Temporary Mobile Subscriber identity number or, if the request is for a routing area update, a Packet-Temporary Mobile Subscriber identity number, the Temporary Mobile Subscriber Identity number or Packet Temporary Mobile Subscriber Identity number being sent to the terminal in said area update message.

10. A method or system according to any preceding claim wherein, if the first and second nodes are Mobile Switching Centres, the network causes the terminal to request a location area update, and if the first and second nodes are Serving GPRS Support Nodes, the network causes the terminal to request a routing area update.

## Patentansprüche

1. Verfahren zum Reduzieren der Last auf einem ersten Knoten (2; 16) in einem zellularen Telekommunikationsnetz, wobei das Netz ein Funkzugangsnetz, das zum Rundsenden von wenigstens einer Bereichskennung konfiguriert ist, die jeweils verschiedene zellulare Bereiche in dem Telekommunikationsnetz identifizieren, und ein Kernnetz zum Bereitstellen von Telekommunikationsfunktionen für dort registrierte Endgeräte beinhaltet, wobei das Verfahren die folgenden Schritte beinhaltet: das Netz sendet eine Bereichsaktualisierungsnachricht zu einem Endgerät, um zu bewirken, dass das Endgerät eine Ortsbereichs- oder Routing-Bereichs- oder Verfolgungsbereichsaktualisierung von dem Netz anfordert; das Netz sendet Informationen zum Identifizieren eines zweiten Knotens zu dem Endgerät, wobei eine Adresse eines zweiten Knotens (30; 31) anhand der Zweiter-Knoten-Identifikationsinformationen identifiziert werden kann; das Endgerät sendet eine Bereichsaktualisierungsanforderung als Reaktion auf die Nachricht, wobei die Anforderung die genannten Informationen zum Identifizieren des zweiten Knotens enthält; und das Netz empfängt die Anforderung und verwendet die genannten Informationen zum Identifizieren des zweiten Knotens zum Leiten der Anforderung zu dem zweiten Knoten (30; 31); **dadurch gekennzeichnet, dass**:
die Bereichsaktualisierungsnachricht ferner eine Bereichskennung enthält, die keiner rundgesendeten Bereichskennung entspricht, die aber Informationen zum Identifizieren des ersten Knotens enthält,
dadurch, dass die vom Endgerät gesendete Anforderung die Bereichskennung mit den genannten Informationen zum Identifizieren des zweiten Knotens enthält, und
dadurch, dass der zweite Knoten die genannten Informationen zum Identifizieren des ersten Knotens in der Bereichskennung zum Identifizieren einer Adresse des ersten Knotens (2; 16) benutzt.

2. System zum Reduzieren der Last auf einem ersten Knoten (2, 16) in einem zellularen Telekommunikationsnetz, das Folgendes umfasst: ein Telekommunikationsnetz mit einem Funkzugangsnetz, das zum Rundsenden von wenigstens einer Bereichskennung konfiguriert ist, die jeweils verschiedene zellulare Bereiche in dem Telekommunikationsnetz identifizieren, und ein Kernnetz zum Bereitstellen von Telekommunikationsfunktionen für dort registrierte Endgeräte, und ein bei dem Kernnetz registriertes Endgerät, wobei das Netz eine Bereichsaktualisierungsnachricht zu einem Endgerät sendet, um zu bewirken, dass das Endgerät eine Ortsbereichs- oder Routing-Bereichs- oder Verfolgungsbereichsaktualisierung von dem Netz anfordert; das Netz sendet Informationen zum Identifizieren eines zweiten Knotens zu dem Endgerät, wobei eine Adresse eines zweiten Knotens (30; 31) anhand der Zweiter-Knoten-Identifikationsinformationen identifiziert werden kann; das Endgerät als Reaktion auf die Nachricht eine Bereichsaktualisierungsanforderung sendet, wobei die Anforderung die genannten Informationen zum Identifizieren des zweiten Knotens enthält; und das Netz die Anforderung empfängt und die genannten Informationen zum Identifizieren des zweiten Knotens zum Leiten der Anforderung zum zweiten Knoten (30; 31) benutzt; **dadurch gekennzeichnet, dass**:
die Bereichsaktualisierungsnachricht ferner eine Bereichskennung beinhaltet, die keiner rundgesendeten Bereichskennung entspricht, die aber Informationen zum Identifizieren des ersten Knotens enthält,
dadurch, dass die vom Endgerät gesendete Anforderung die Bereichskennung mit den genannten Informationen zum Identifizieren des ersten Knotens enthält, und
dadurch, dass der zweite Knoten die genannten Informationen zum Identifizieren des ersten Knotens in der Bereichskennung zum Identifizieren einer Adresse des zweiten Knotens (2; 16) benutzt.

3. Verfahren oder System nach Anspruch 1 oder 2, wobei der zweite Knoten (30; 31) die Kontextinformationen des Endgeräts vom ersten Knoten (2; 16) abruft.

4. Verfahren oder System nach einem der vorherigen Ansprüche, wobei die Bereichsaktualisierungsnachricht vom ersten Knoten (2, 16) gesendet wird.

5. Verfahren oder System nach einem der vorherigen Ansprüche, wobei die Bereichsaktualisierungsnachricht die Informationen zum Identifizieren des ersten Knotens und die Informationen zum Identifizieren des zweiten Knotens enthält.

6. Verfahren oder System nach einem der vorherigen Ansprüche, wobei das Funkzugangsnetz eine erste Bereichsidentität rundsendet, die den Bereich identifiziert, in dem sich das Endgerät befindet, und so, dass bewirkt wird, dass das Endgerät die Bereichsaktualisierung anfordert, da die Bereichskennung in der Bereichsaktualisierungsnachricht der ersten Bereichsidentität nicht entspricht.

7. Verfahren oder System nach einem der Ansprüche 1 bis 5, wobei das Funkzugangsnetz eine erste Routing-Bereichsidentität mit einer ersten Ortsbereichsidentität rundsendet, die jeweils den Routing-Bereich und den Ortsbereich identifiziert, in dem sich das Endgerät befindet, und so, dass bewirkt wird, dass das Endgerät eine kombinierte Routing-Bereichsaktualisierung anfordert, da die Bereichskennung in der Bereichsaktualisierungsnachricht der ersten Bereichsidentität nicht entspricht.

8. Verfahren oder System nach einem der vorherigen Ansprüche, wobei jede Bereichskennung eine Ortsbereichsidentität oder eine Routing-Bereichsidentität oder eine Verfolgungsbereichsidentität ist.

9. Verfahren oder System nach einem der vorherigen Ansprüche, wobei die Knotenidentifikationsinformation Teil einer Temporär-Mobil-Teilnehmer-Identitätsnummer ist, wenn eine Ortsbereichsaktualisierung angefordert wird, oder einer Paket-Temporär-Mobil-Teilnehmer-Identitätsnummer ist, wenn eine Routing-Bereichsaktualisierung angefordert wird, wobei die Temporär-Mobil-Teilnehmer-Identitätsnummer oder die Paket-Temporär-Mobil- Teilnehmer-Identitätsnummer in der genannten Bereichsaktualisierungsnachricht zum Endgerät gesendet wird.

10. Verfahren oder System nach einem der vorherigen Ansprüche, wobei, wenn der erste und der zweite Knoten Mobilfunkvermittlungsstellen sind, das Netz bewirkt, dass das Endgerät eine Ortsbereichsaktualisierung anfordert, und wenn der erste und der zweite Knoten Serving GPRS Support Nodes sind, das Netz bewirkt, dass das Endgerät eine Routing-Bereichsaktualisierung anfordert.

## Revendications

1. Procédé de réduction de la charge sur un premier noeud (2 ; 16) dans un réseau de télécommunications cellulaires, le réseau englobant un réseau d'accès radio lequel est configuré de façon à diffuser au moins un identifiant de zone, alors que chacun assure l'identification de différentes zones cellulaires dans le réseau de télécommunications, et un réseau infrastructurel pour procurer des fonctions de télécommunications aux terminaux enregistrés auprès de celui-ci, le procédé comprenant les étapes suivantes, à savoir le réseau envoyant à un terminal un message de mise à jour de zone pour obliger le terminal à demander une mise à jour de zone de localisation ou de zone de routage ou de zone de suivi auprès du réseau ; le réseau envoyant au terminal des informations d'identification de second noeud, cas dans lequel une adresse d'un second noeud (30 ; 31) peut être identifiée à partir desdites informations d'identification de second noeud ; le terminal, en réaction au message, envoyant une demande pour une mise à jour de zone, la demande englobant lesdites informations d'identification de second noeud ; et le réseau recevant la demande et utilisant lesdites informations d'identification de second noeud pour acheminer la demande au second noeud (30 ; 31), **caractérisé en ce que** :
le message de mise à jour de zone englobe en outre un identifiant de zone qui ne correspond pas à un identifiant de zone diffusé, mais qui englobe des informations d'identification de premier noeud ;
**en ce que** la demande envoyée par le terminal englobe l'identifiant de zone possédant lesdites informations d'identification de premier noeud ;
et **en ce que** le second noeud utilise lesdites informations d'identification de premier noeud indiquées dans l'identifiant de zone afin d'identifier une adresse du premier noeud (2 ; 16).

2. Système de réduction de la charge sur un premier noeud (2 ; 16) dans un réseau de télécommunications cellulaires, comprenant un réseau de télécommunications incluant un réseau d'accès radio lequel est configuré de façon à diffuser au moins un identifiant de zone, alors que chacun assure l'identification de différentes zones cellulaires dans le réseau de télécommunications, et un réseau infrastructurel pour procurer des fonctions de télécommunications aux terminaux enregistrés auprès de celui-ci, et un terminal enregistré auprès du réseau infrastructurel, le réseau envoyant à un terminal un message de mise à jour de zone pour obliger le terminal à demander une mise à jour de zone de localisation ou de zone de routage ou de zone de suivi auprès du réseau ; le réseau envoyant au terminal des informations d'identification de second noeud, cas dans lequel une adresse d'un second noeud (30 ; 31) peut être identifiée à partir desdites informations d'identification de second noeud ; le terminal, en réaction au message, envoyant une demande pour une mise à jour de zone, la demande englobant lesdites informations d'identification de second noeud ; et le réseau recevant la demande et utilisant lesdites informations d'identification de second noeud pour acheminer la demande au second noeud (30 ; 31), **caractérisé en ce que** :
le message de mise à jour de zone englobe en outre un identifiant de zone qui ne correspond pas à un identifiant de zone diffiisé, mais qui englobe des informations d'identification de premier noeud ;
**en ce que** la demande envoyée par le terminal englobe l'identifiant de zone possédant lesdites informations d'identification de premier noeud ;
et **en ce que** le second noeud utilise lesdites informations d'identification de premier noeud indiquées dans l'identifiant de zone afin d'identifier une adresse du premier noeud (2 ; 16).

3. Procédé ou système selon la revendication 1 ou 2, le second noeud (30 ; 31) récupérant les informations contextuelles du terminal à partir du premier noeud (2 ; 16).

4. Procédé ou système selon l'une quelconque des revendications précédentes, le message de mise à jour de zone étant envoyé par le premier noeud (2 ; 16).

5. Procédé ou système selon l'une quelconque des revendications précédentes, le message de mise à jour de zone contenant les informations d'identification de premier noeud et les informations d'identification de second noeud.

6. Procédé ou système selon l'une quelconque des revendications précédentes, le réseau d'accès radio diffusant une première identité de zone laquelle identifie la zone dans laquelle le terminal est localisé, et de sorte que le terminal est obligé de demander la mise à jour de zone du fait que l'identifiant de zone indiqué dans le message de mise à jour de zone ne correspond pas à la première identité de zone.

7. Procédé ou système selon l'une quelconque des revendications 1 à 5, le réseau d'accès radio diffusant une première identité de zone de routage englobant une première identité de zone de localisation laquelle identifie respectivement la zone de routage et la zone de localisation dans lesquelles le terminal est localisé, et de sorte que le terminal est obligé de demander une mise à jour de zone de routage combinée du fait que l'identifiant de zone indiqué dans le message de mise à jour de zone ne correspond pas à la première identité de zone.

8. Procédé ou système selon l'une quelconque des revendications précédentes, chaque identifiant de zone étant une identité de zone de localisation ou une identité de zone de routage ou une identité de zone de suivi.

9. Procédé ou système selon l'une quelconque des revendications précédentes, si la demande concerne une mise à jour de zone de localisation, les informations d'identification de noeud faisant partie d'un numéro d'identité d'abonné mobile temporaire, ou, si la demande concerne une mise à jour de zone de routage, les informations faisant partie d'un numéro d'identité d'abonné mobile temporaire en paquets, le numéro d'identité d'abonné mobile temporaire ou le numéro d'identité d'abonné mobile temporaire en paquets étant alors envoyé au terminal dans ledit message de mise à jour de zone.

10. Procédé ou système selon l'une quelconque des revendications précédentes, si les premier et second noeuds sont des centres de commutation mobiles, le réseau obligeant le terminal à demander une mise à jour de zone de localisation, et si les premier et second noeuds sont des noeuds de support GPRS de desserte, le réseau obligeant alors le terminal à demander une mise à jour de zone de routage.
